# EUROPÄISCHE PATENTSCHRIFT

(11) **EP 3 000 701 B1**
(45) Veröffentlichungstag und Bekanntmachung des Hinweises auf die Patenterteilung: **01.05.2019**
(21) Anmeldenummer: 15186292.7
(22) Anmeldetag: 22.09.2015
(51) Int. Cl.: B62J 15/00

(54) **ZWEIRAD-SCHUTZBLECH**
BICYCLE MUDGUARD
GARDE-BOUE POUR DEUX ROUES

(30) Priorität: 23.09.2014 DE 202014104551 U
(43) Veröffentlichungstag der Anmeldung: 30.03.2016
(73) Patentinhaber: Büchel GmbH & Co. Fahrzeugteilefabrik KG, 36039 Fulda (DE)
(72) Erfinder: Büchel, Erhard, 36043 Fulda (DE); Junghänel, Mirko, 09569 Oederan (DE)
(74) Vertreter: Puschmann Borchert Bardehle Patentanwälte Partnerschaft mbB

(56) Entgegenhaltungen:
- CN-U- 203 450 259
- DE-A1- 19 531 076
- DE-U1-202007 009 641
- DE-U1-202008 016 312
- DE-U1-202009 018 065

## Beschreibung

Die Erfindung betrifft ein Zweirad-Schutzblech, welches zur Abdeckung wenigstens eines zugeordneten Fahrzeugrades eines Zweiradfahrzeugs in einem Abstand zu einem Außenumfang des Fahrzeugrades anzuordnen ist und welches als Strangprofil mit wenigstens einer Hohlkammer ausgebildet ist.

Aus der DE 10 2008 019 166 A1 ist ein Kotflügel zur Abdeckung wenigstens eines zugeordneten Fahrzeugrades eines Lastkraftwagens mit wenigstens einem Kotflügelteil, welches in einem Abstand zu einem Außenumfang des Fahrzeugrades anzuordnen ist und welchem wenigstens ein Druckluftbehälter zugeordnet ist, wobei das Kotflügelteil als Strangpressprofil mit wenigstens einer Hohlkammer ausgebildet ist, in welche der zugeordnete Behälter, insbesondere der Druckluftbehälter, integriert ist. Das Kotflügelteil umfasst eine Mehrzahl von Hohlkammern, welche übereinander angeordnet sind. Da der mittlere Bereich des Kotflügels zwischen den Hohlkammern nur eine einzige Wandung aufweist, ist die Stabilität des Kotflügels gegen eine Verformung nicht ausreichend.

DE 195 331 076, auf der der Oberbegriff von Anspruch 1 basiert, offenbart eine Schmutzfang-Vorrichtung für Fahrräder, dessen Innenraum von einem gasdichten Material ummantelt und in mehrere Kammern aufgeteilt ist. Die Schmutzfang-Vorrichtung ist als Schlauch ausgebildet gestaltet, sodass, wenn ein Gas in den Innenraum eingebracht wird, die Schmutzfang-Vorrichtung sich formstabil an den Radumfang anpasst. Die stabile radumspannende Form wird durch Verschweißen eines vorgeformten Oberteils und eines vorgeformten Unterteils erreicht.

Dem gegenüber liegt der Erfindung die Aufgabe zugrunde, ein Fahrrad-Schutzblech der oben genannten Art so weiterzubilden, dass die Stabilität erhöht wird, während die Unterbringung von Leitungen und Befestigungsmittel die Optik des Zweiradschutzbleches nicht beeinträchtigen soll.

Dazu ist das erfindungsgemäße Zweirad-Schutzblech, welches zur Abdeckung wenigstens eines zugeordneten Fahrzeugrades eines Zweiradfahrzeugs in einem Abstand zu einem Außenumfang des Fahrzeugrades anzuordnen ist wobei das Zweirad-Schutzblech eine bogenförmig verlaufende Außenwand und eine ebenfalls bogenförmig verlaufende Innenwand aufweist, und wobei die Außenwand und die Innenwand an ihren Seitenrändern miteinander einstückig sind und einen Hohlraum umgeben, der durch Trennwände in mehrere Hohlkammern unterteilt ist, welche nebeneinander angeordnet sind, dadurch gekennzeichnet, dass die Außenwand und die Innenwand ein Strangprofil bilden, und dass die Hohlkammern durch Bohrungen in der Außenwand bzw, der Innenwand zugänglich sind.

Durch diese Ausgestaltung des Querschnitts des Zweirad-Schutzblechs wird eine erheblich verbesserte Stabilität des Schutzblechs als solches erzielt und außerdem ergibt sich ansprechende Optik des Schutzblechs aufgrund der beiden geschlossenen Oberflächen. Außerdem bieten die Hohlräume Gelegenheit, Konstruktionselemente unterzubringen, ohne die Optik des Schutzblechs zu beeinträchtigen. Die Konstruktionselemente, die in den Hohlkammern des Schutzblechs untergebracht werden können, können außer elektrischen Leitungen auch Befestigungsmittel und Strebenhalterungen für Streben, die das Schutzblech an dem Fahrzeug tragen, umfassen. Wenn diese Teile in dem Schutzblech untergebracht sind, wird das Aussehen des Schutzblechs weiter verbessert. Aufgrund er Bohrungen können außerdem Leitungen, beispielsweise Leitungen der Fahrzeugbeleuchtung, einfach in das Schutzblech integriert werden.

Nach einer vorteilhaften Ausgestaltung ist das erfindungsgemäße Zweirad-Schutzblech dadurch gekennzeichnet, dass die Hohlkammern an den Längsenden des Schutzblechs durch Deckelteile verschlossen sind, um das Eindringen von Schmutz oder Feuchtigkeit zu verhindern, so dass die in dem Schutzblech untergebrachten Konstruktionselemente nicht beeinträchtigt oder beschädigt werden können.

Nach einer weiteren vorteilhaften Ausgestaltung ist das erfindungsgemäße Zweirad-Schutzblech dadurch gekennzeichnet, dass das auf der Außenwand des Schutzblechs über einer zentralen Hohlkammer ein Befestigungsteil zur Befestigung des Schutzblechs an dem Fahrzeug angebracht ist. Aufgrund der Hohlraumstruktur des Strangprofils des Zweirad-Schutzblechs bietet die Außenwand über der zentralen Hohlkammer die Möglichkeit, das Befestigungsteil sicher und stabil an dem Schutzblech anzubringen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In den Figuren ist:
- Fig. 1: ein Schnitt durch das Zweirad-Schutzblech nach einem Ausführungsbeispiel der Erfindung;
- Fig. 2: eine perspektivische Darstellung des Zweirad-Schutzblechs von Fig. 1; und
- Fig. 3: eine Draufsicht auf das Zweirad-Schutzblechs von Fig. 1.

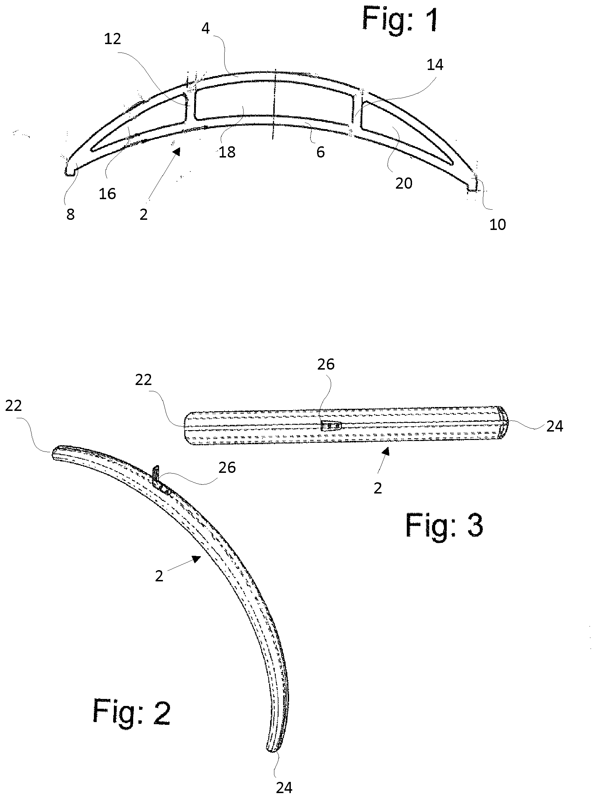

Fig. 1 zeigt einen Schnitt durch das Zweirad-Schutzblech 2 des gezeigten Ausführungsbeispiels, welches zur Abdeckung wenigstens eines zugeordneten Fahrzeugrades eines Zweiradfahrzeugs in einem Abstand zu einem Außenumfang des Fahrzeugrades anzuordnen ist und welches als Strangprofil ausgebildet ist. Das Zweirad-Schutzblech 2 hat eine bogenförmig verlaufende Außenwand 4 und eine ebenfalls bogenförmig verlaufende Innenwand 6. Die Außenwand 4 und die Innenwand 6 sind an ihren Seitenrändern 8, 10 miteinander einstückig ausgebildet. Die Außenwand 4 und die Innenwand 6 umgeben einen Hohlraum, der durch Trennwände 12, 14 in die drei Hohlkammern16, 18, 20, zwei seitliche 16, 20 und eine zentrale Hohlkammer 18, unterteilt ist, welche nebeneinander angeordnet sind. Die Hohlkammern 16, 18, 20 sind durch Bohrungen (nicht gezeigt) in der Außenwand 4 bzw. der Innenwand 6 zugänglich. Die Hohlkammern 16, 18, 20 sind an den Längsenden 22, 24 des Schutzblechs durch Deckelteile (nicht gezeigt) verschlossen.

Wie in Fig. 2 gezeigt ist, ist auf der Außenwand 4 des Schutzblechs 2 über der zentralen Hohlkammer 18 ein Befestigungsteil 26 zur Befestigung des Schutzblechs 2 an dem Fahrzeug angebracht. Im Übrigen sind die Hohlkammern 16, 18, 20 zur Aufnahme von elektrischen Leitungen und/oder Strebenhalterungen für Streben, die das Schutzblech an dem Fahrzeug tragen, ausgelegt.

### Bezugszeichenliste

- 2: Zweirad-Schutzblech
- 4: Außenwand
- 6: Innenwand
- 8: Seitenrand
- 10: Seitenrand
- 12: Trennwand
- 14: Trennwand
- 16: Hohlkammer
- 18: Hohlkammer
- 20: Hohlkammer
- 22: Längsende
- 24: Längsende
- 26: Befestigungsteil

## Patentansprüche

1. Zweirad-Schutzblech, welches zur Abdeckung wenigstens eines zugeordneten Fahrzeugrades eines Zweiradfahrzeugs in einem Abstand zu einem Außenumfang des Fahrzeugrades anzuordnen ist wobei das Zweirad-Schutzblech eine bogenförmig verlaufende Außenwand (4) und eine ebenfalls bogenförmig verlaufende Innenwand (6) aufweist und die Außenwand (4) und die Innenwand (6) an ihren Seitenrändern (8, 10) miteinander einstückig sind und einen Hohlraum umgeben, der durch Trennwände (12, 14) in mehrere Hohlkammern (16, 18, 20) unterteilt ist, welche nebeneinander angeordnet sind, **dadurch gekennzeichnet, dass** das Zweirad-Schutzblech als Strangprofil ausgebildet ist und dass die Hohlkammern (16, 18, 20) durch Bohrungen in der Außenwand (4) bzw. der Innenwand (6) zugänglich sind.

2. Zweirad-Schutzblech nach Anspruch 1, **dadurch gekennzeichnet, dass** die Hohlkammern (16, 18, 20) an den Längsenden (22, 24) des Schutzblechs (2) durch Deckelteile verschlossen sind.

3. Zweirad-Schutzblech nach Anspruch 1 oder 2, **dadurch gekennzeichnet, dass** das auf der Außenwand (4) des Schutzblechs (2) über einer zentralen Hohlkammer (18) ein Befestigungsteil (26) zur Befestigung des Schutzblechs an dem Fahrzeug angebracht ist.

## Claims

1. Mudguard for a two-wheeled vehicle, which mudguard, in order to cover at least one associated wheel of a two-wheeled vehicle, is to be positioned at a distance from an outer perimeter of the vehicle wheel, said two-wheeler mudguard having an arching outer wall (4) and a likewise arching inner wall (6), wherein the lateral edges (8, 10) of the outer wall (4) and of the inner wall (6) are integrally formed and wherein the outer wall (4) and the inner wall (6) surround a hollow space which is subdivided into plural hollow chambers (16, 18, 20) by partition walls (12, 14) that are arranged next to one another, **characterized in that** the two-wheeler mudguard is in the form of an extruded profile and that the hollow chambers (16, 18, 20) can be accessed through bores provided in the outer wall (4) and/or in the inner wall (6).

2. Two-wheeler mudguard according to claim 1, **characterized in that,** at the longitudinal ends (22, 24) of the mudguard (2), the hollow chambers (16, 18, 20) are closed by cover parts.

3. Two-wheeler mudguard according to claim 1 or 2, **characterized in that** the outer wall (4) of the mudguard (2) has a mounting part (26) for attaching the mudguard to the vehicle, which mounting part (26) is provided on the outer wall (4) of the mudguard (2), above a central hollow chamber (18).

## Revendications

1. Garde-boue de deux-roues, lequel, pour recouvrir au moins une roue de véhicule associée d'un véhicule deux-roues, doit être agencé à distance d'une périphérie extérieure de la roue de véhicule, dans lequel le garde-boue de deux-roues présente une paroi extérieure (4) s'étendant en forme d'arc et une paroi intérieure (6) s'étendant également en forme d'arc et la paroi extérieure (4) et la paroi intérieure (6) forment une seule pièce au niveau de leurs bords latéraux (8, 10) et entourent une cavité qui est divisée par des cloisons (12, 14) en plusieurs chambres creuses (16, 18, 20), lesquelles sont juxtaposées, **caractérisé en ce que** le garde-boue de deux-roues est réalisé sous la forme d'un profilé extrudé et **en ce que** les chambres creuses (16, 18, 20) sont accessibles par des trous dans la paroi extérieure (4) ou la paroi intérieure (6).

2. Garde-boue de deux-roues selon la revendication 1, **caractérisé en ce que** les chambres creuses (16, 18, 20) sont fermées par des parties formant couvercle aux extrémités longitudinales (22, 24) de garde-boue (2).

3. Garde-boue de deux-roues selon la revendication 1 ou 2, **caractérisé en ce qu'**une pièce de fixation (26) permettant la fixation du garde-boue au véhicule est montée sur la paroi extérieure (4) du garde-boue (2) au-dessus d'une chambre creuse (18) centrale.
